# FASCICULE DE BREVET EUROPEEN

(11) **EP 2 920 429 B1**
(45) Date de publication et mention de la délivrance du brevet: **25.03.2020**
(21) Numéro de dépôt: 13803129.9
(22) Date de dépôt: 12.11.2013
(51) Int. Cl.: G01P 21/02, F01D 17/06, F01D 21/00

(54) **DISPOSITIF ET PROCEDE DE PROTECTION D'UN CALCULATEUR DE TURBO-MACHINE D'AERONEF CONTRE LES ERREURS DE MESURE DE VITESSE**
VORRICHTUNG UND VERFAHREN ZUM SCHUTZ EINES FLUGZEUGTURBOMASCHINENCOMPUTERS VOR GESCHWINDIGKEITSMESSFEHLERN
DEVICE AND METHOD FOR PROTECTING AN AIRCRAFT TURBOMACHINE COMPUTER AGAINST SPEED MEASUREMENT ERRORS

(30) Priorité: 13.11.2012 FR 1260802
(43) Date de publication de la demande: 23.09.2015
(73) Titulaire: Safran Power Units, 31200 Toulouse (FR)
(72) Inventeur: PASQUIER, Ludovic, 31150 Fenouillet (FR); JOACHIM, Rémi, F-31280 Dremil-lafage (FR)
(74) Mandataire: Brevalex
(86) Numéro de dépôt international: PCT/FR2013/052699
(87) Numéro de publication internationale: WO 2014/076398

(56) Documents cités:
- US-A- 3 859 006
- US-A- 4 217 617
- US-A- 4 667 114
- US-A- 5 234 315
- US-A1- 2008 213 084
- US-A1- 2010 005 657
- US-B1- 6 176 074
- US-B1- 6 480 780
- FREDERICKSON T ET AL: "COMPARISON OF FAULT TOLERANT CONTROLLERS USED IN SAFETY APPLICATIONS", ISA TRANSACTIONS, INSTRUMENT SOCIETY OF AMERICA. PITTSBURGH, US, vol. 30, no. 4, 1 janvier 1991 (1991-01-01), pages 97-106, XP000275597, ISSN: 0019-0578, DOI: 10.1016/0019-0578(91)90013-U
- YEH Y C: "TRIPLE-TRIPLE REDUNDANT 777 PRIMARY FLIGHT COMPUTER", IEEE AEROSPACE APPLICATIONS CONFERENCE. PROCEEDINGS, XX, XX, vol. 1, 3 février 1996 (1996-02-03), pages 293-307, XP000603215,
- LI XIAOXUN ET AL: "A Comparison of SAE ARP 4754A and ARP 4754", PROCEDIA ENGINEERING, vol. 17, 1 janvier 2011 (2011-01-01), pages 400-406, XP055100005, ISSN: 1877-7058, DOI: 10.1016/j.proeng.2011.10.047

## Description

### DOMAINE TECHNIQUE

L'invention concerne un dispositif et un procédé de protection d'un calculateur de turbo-machine, par exemple un groupe auxiliaire de puissance (APU), à bord d'un aéronef, par exemple un hélicoptère, contre les erreurs de mesure de vitesse.

### ÉTAT DE LA TECHNIQUE ANTÉRIEURE

Le domaine de l'invention est celui des turbo-machines d'aéronef, et plus particulièrement celui des calculateurs de turbo-machines d'aéronefs utilisés pour réguler le comportement de ces turbo-machines. De tels calculateurs peuvent réunir dans un même boîtier un canal de régulation et un canal de surveillance ou de protection contre les erreurs de mesure de vitesse, ce qui permet d'obtenir un coût plus économique et une masse plus faible qu'une solution dans laquelle ces canaux seraient installés dans deux boîtiers séparés.

Le canal de régulation a pour fonction de réguler la vitesse de la turbo-machine. Mais une défaillance de ce canal de régulation peut entraîner une survitesse de l'arbre de turbine. En effet, lors d'une rupture de cet arbre, la puissance fournie par les gaz à la turbine n'est plus absorbée par les équipements entraînés par cet arbre et la vitesse de rotation de la turbine s'accroit de façon extrêmement rapide. Une telle survitesse aboutit très rapidement à une rupture des parties tournantes et/ou à leur séparation d'avec le disque de turbine. Ces parties tournantes sont alors projetées violemment vers l'extérieur du fait de la force centrifuge et peuvent traverser le carter entourant la turbine, provoquant des dégâts très importants dans le moteur, et pouvant même mettre en danger l'aéronef et ses passagers.

Le canal de surveillance à pour objet de prévenir les conséquences d'une telle survitesse. Le canal de surveillance comporte un organe électronique associé à un organe hydromécanique. L'organe électronique mesure la vitesse de rotation du rotor. Si l'organe électronique détecte une erreur de mesure de vitesse, il commande alors l'organe hydromécanique, qui coupe totalement l'alimentation en carburant de la turbo-machine.

De manière connue on mesure la vitesse de rotation de la turbine avec au moins deux capteurs indépendants, un pour le canal de régulation, l'autre pour le canal de surveillance. Les fréquences représentatives des vitesses de rotation de la boite d'engrenages et du générateur de gaz de la turbo-machine sont les variables primaires de régulation de la vitesse de rotation (régulation) et de la protection contre un départ en survitesse associé (surveillance).

Une analyse de sécurité ayant mis en évidence un lien direct entre ces fréquences et la mise en situation d'une survitesse de la turbo-machine, l'invention a pour objet de proposer un dispositif et un procédé de protection du calculateur de turbo-machine contre les erreurs de mesure de vitesse permettant de s'assurer de l'exactitude des mesures de fréquence afin notamment d'éviter toute mesure de vitesse sous-évaluée, en garantissant l'absence d'erreur de mode commun pouvant mener à une survitesse non protégée. Cette contrainte est imposée par la nécessité de garantir le niveau le plus haut de sécurité au sens de la norme ARP4754 FDAL A (catastrophique).

US-A- 2008/213084 et US-B- 4 667 114 divulguent des dispositifs de protection contre une survitesse. Si un capteur ne délivre pas un signal de vitesse, une erreur est indiquée.

Selon US-A- 5 234 315, les signaux de deux capteurs adaptés à mesurer la vitesse de deux parties d'un même arbre sont comparés.

Selon US-A- 6 176 074, il est possible d'identifier un problème si la vitesse d'un premier arbre surpasse un pourcentage prédéterminé de sa vitesse maximale, mais la vitesse d'un deuxième arbre ne surpasse pas un pourcentage prédéterminé de sa vitesse maximale.

### EXPOSÉ DE L'INVENTION

L'invention concerne un dispositif de protection d'un calculateur de turbo-machine d'aéronef contre les erreurs de mesure de vitesse comprenant les caractéristiques de la revendication 1.

Les capteurs de vitesse sont des roues de technologies différentes et de nombres de dents différents.

Avantageusement les arbres sont des arbres différents tournant à des vitesses de rotation différentes.

Avantageusement les signaux des fréquences sont des signaux de fréquences différentes de telle sorte que la perte d'une période sur l'un des signaux ou même des deux signaux simultanément mène à un écart anormal entre les deux vitesses supérieur à l'accélération maximale d'un APU et très largement supérieur à l'écart de vitesse lors d'une torsion maximum de l'arbre.

Avantageusement les signaux de fréquence sont véhiculés sur des routages électriques différents.

Avantageusement les signaux de fréquence sont exploités par des cartes électroniques différentes.

Avantageusement le dispositif de l'invention comprend, sur chaque canal, un circuit de détection de rupture de câblage.

Avantageusement, la turbo-machine peut être un groupe auxiliaire de puissance (APU). L'invention peut concerner un aéronef, par exemple un hélicoptère, mettant en œuvre un tel dispositif.

L'invention concerne également un procédé de protection d'un calculateur de turbo-machine d'aéronef contre les erreurs de mesure de vitesse comprenant les caractéristiques de la revendication 9.

Avantageusement la turbo-machine est stoppée en cas d'absence de signal de fréquence, sur au moins un canal, durant un temps déterminé après la commande de démarrage de la turbo-machine. Avantageusement la turbo-machine est stoppée en cas de perte de signal de fréquence en fonctionnement.

Avantageusement lorsque la fréquence minimum Fmin est atteinte et que les signaux semblent cohérents, les contrôles complémentaires suivants interviennent :
- Du côté canal de régulation, la turbo-machine est stoppée en cas de détection d'une variation invraisemblable de la vitesse, la perte confirmée d'une ou plusieurs périodes menant à cette détection, le canal de régulation constatant cette anomalie et stoppant la turbo-machine.
- Du côté canal de surveillance, la turbo-machine est stoppée en cas de détection de perte de dent sur le signal vitesse du canal de surveillance, le canal de surveillance constatant cette anomalie et stoppant la turbo-machine.

Avantageusement dans le cas où la fréquence minimum Fmin n'est pas atteinte, les contrôles complémentaires suivants interviennent :
- Du côté canal de régulation, la turbo-machine est stoppée en cas de détection du fait que la vitesse du canal de régulation n'a pas dépassé la sous-vitesse dans le délai imparti, le canal de régulation constatant cette anomalie et stoppant la turbo-machine.

### BRÈVE DESCRIPTION DES DESSINS

La figure 1 illustre le dispositif de protection d'un calculateur de turbo-machine d'aéronef contre les erreurs de mesure de vitesse, selon l'invention.
La figure 2 illustre un exemple de réalisation d'un circuit de mesure de vitesse du dispositif de l'invention.

### EXPOSÉ DÉTAILLÉ DE MODES DE RÉALISATION PARTICULIERS

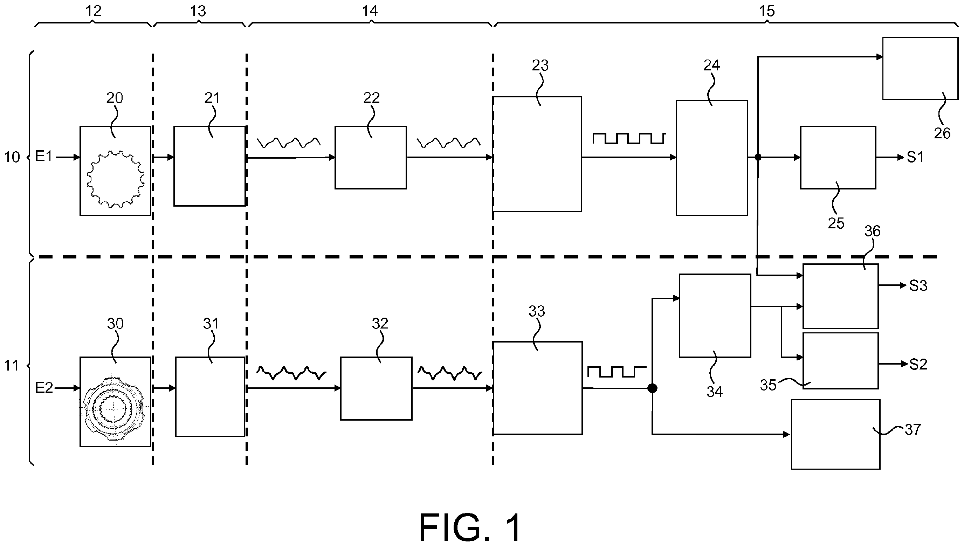

Le dispositif de protection d'un calculateur de turbo-machine d'aéronef contre les erreurs de mesure de vitesse selon l'invention, comme illustré sur la figure 1, comprend un canal de régulation de vitesse 10 et un canal de surveillance des erreurs de mesure de vitesse 11. Le canal de régulation 10 mesure, en entrée E1, la vitesse de rotation de l'arbre de la boite d'engrenages à l'aide d'un capteur de vitesse, par exemple un capteur magnétique 21 disposé au regard des dents d'une roue phonique 20 installée sur cet arbre.

Le canal de surveillance 11 mesure, en entrée E2, la vitesse de rotation de l'arbre du générateur de gaz de la turbo-machine à l'aide d'un capteur de vitesse, par exemple un capteur magnétique 31 disposé au regard des dents d'une roue phonique 30 installée sur cet arbre. Ces deux canaux générant des fréquences différentes, on effectue un contrôle de cohérence 36 des deux fréquences ainsi générées à l'intérieur du canal de surveillance 11.

La figure 1 illustre les différents circuits du dispositif de l'invention disposés respectivement dans la turbo-machine 12, dans le capteur 13, dans le câblage 14 et dans l'unité de commande électronique (ECU) 15, pour les deux canaux 10 et 11.

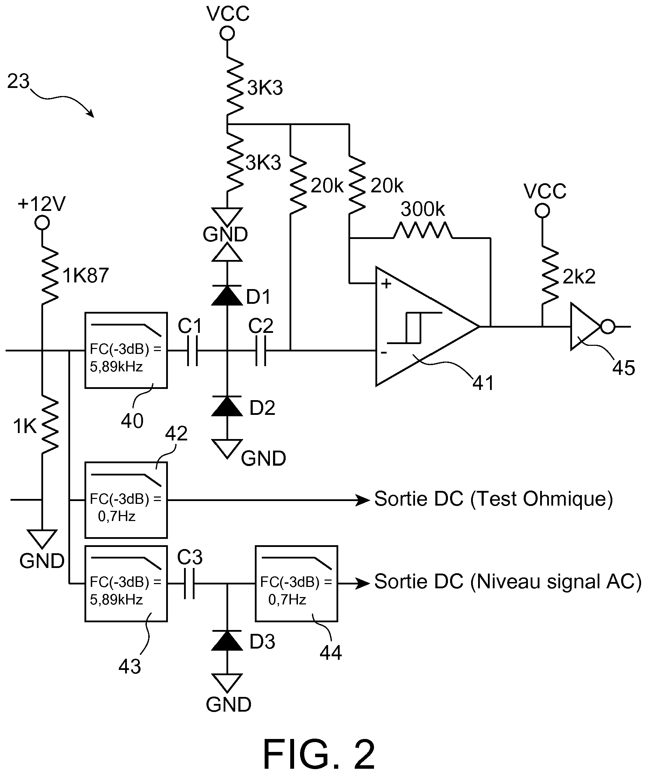

Dans le canal de régulation 10, le dispositif de l'invention comprend :
- une roue phonique 20,
- un capteur de vitesse 21 de l'arbre de la boite d'engrenages de la turbo-machine qui délivre un signal de fréquence pseudo-sinusoïdal pouvant atteindre au maximum 35 volts crête-crête,
- un circuit 22 de câblage qui véhicule ce signal pseudo-sinusoïdal,
- un circuit 23, détaillé en figure 2, de mise en forme de ce signal pseudo-sinusoïdal, qui délivre un signal de fréquence carré variant entre les deux niveaux 0 et 5 volts, et détecte une éventuelle rupture du câblage,
- un circuit de mesure de vitesse 24 qui délivre une mesure de vitesse en tours/minute,
- un circuit de surveillance de vitesse 25 qui effectue une comparaison à un seuil minimum, vérifie le dépassement de la sous-vitesse dans un délai imparti, surveille une variation invraisemblable de la vitesse, et qui délivre éventuellement un signal S1 de détection de problème de vitesse,
- un circuit de régulation de vitesse 26.

Dans le canal de surveillance 11, le dispositif de l'invention comprend :
- une roue phonique 30 de technologie, d'axe de rotation, de vitesse de rotation et de nombre de dents différents de ceux de la roue phonique 20,
- un capteur de vitesse 31 de l'arbre du générateur de gaz de la turbo-machine, qui délivre un signal de fréquence pseudo-sinusoïdal, différente de celle du capteur 21, pouvant atteindre au maximum 35 volts crête-crête,
- un circuit de câblage 32 qui véhicule ce signal pseudo-sinusoïdal par l'utilisation d'un harnais électrique spécifique ayant un routage différent de celui du circuit 22,
- un circuit 33 de mise en forme de ce signal pseudo-sinusoïdal, différent de celui du circuit 23, qui délivre un signal de fréquence carré variant entre les deux niveaux 0 et 5 volts, et détecte une éventuelle rupture du câblage,
- un circuit de mesure de vitesse 34 qui délivre une mesure de vitesse en tours/minute différente de celle du circuit 24,
- un circuit de surveillance de vitesse 35 qui effectue une comparaison à un seuil minimum et qui délivre éventuellement un signal S2 de détection de problème de vitesse,
- un circuit 36 de vérification croisée des vitesses obtenues par les circuits 24 et 34, qui permet de détecter un écart anormal entre ces deux vitesses, en détectant la perte d'une période sur l'un des deux signaux ou même des deux signaux simultanément, qui mène à un écart anormal entre les deux vitesses supérieur à l'accélération maximale d'un APU très largement supérieur à l'écart de vitesse lors de la torsion maximale de l'arbre, et qui délivre un signal S3 de détection de vérification croisée des vitesses issues des deux canaux 10 et 11,
- un circuit 37 de commande éventuelle de l'arrêt de la turbo-machine en cas de détection de survitesse, ou en cas de détection de perte de dent sur le signal vitesse.

Le fonctionnement du dispositif de l'invention est le suivant :
Si les deux capteurs de vitesse 21 et 31 ne fournissent pas de signal :
- du côté du canal de régulation 10, la turbo-machine est stoppée par le circuit 25 en cas de détection d'absence de signal de fréquence durant un temps déterminé, par exemple 3 secondes, après la commande de démarrage de la turbo-machine ou d'une perte du signal de fréquence en fonctionnement. Si le canal de régulation 10 constate une de ces anomalies, il stoppe la turbo-machine.
- du côté du canal de surveillance 11, la turbo-machine est stoppée par le Circuit 35, en cas de détection d'absence de signal de fréquence durant un temps déterminé, par exemple 3 secondes, après la commande de démarrage de la turbo-machine ou d'une perte du signal de fréquence en fonctionnement. Si le canal de surveillance 11 constate une de ces anomalies, il stoppe la turbo-machine.

En fonctionnement et passé un seuil minimum de fréquence (Fmin) sur l'un ou l'autre des capteurs de vitesse 21 et 31, comme vérifié dans les circuits 25 et 35, les fréquences mesurées sont comparées dans le circuit 36 afin de détecter le dépassement d'un écart anormal dimensionné comme suit :
- l'écart surveillé est supérieur à un écart maximum mécaniquement constaté,
- l'écart surveillé est inférieur à un écart correspondant à la perte d'une période de fréquence sur l'un ou l'autre des capteurs 21 et 31.

Cet écart anormal garantit qu'une des mesures est incohérente. Le dispositif de l'invention met alors la turbo-machine en sécurité en coupant l'alimentation en carburant via un moyen de coupure spécifique du canal de surveillance 11.

Si le capteur de vitesse 21 du canal de régulation 10 ne donne pas de fréquence ou donne une fréquence sous évaluée (perte de périodes sur le signal) le canal de surveillance 11 fonctionne normalement. Lorsque le capteur 31 atteint la fréquence minimum Fmin, le canal de surveillance 11 constate un écart anormal et stoppe la turbo-machine.

Si le capteur de vitesse 31 du canal de surveillance 11 ne donne pas de fréquence ou donne une fréquence sous-évaluée (perte de périodes sur le signal) le canal de régulation 10 fonctionne normalement. Lorsque le capteur 21 atteint la fréquence minimum Fmin, le canal de surveillance 11 constate un écart anormal et stoppe la turbo-machine.

Si les deux capteurs de vitesse 21 et 31 donnent une fréquence sous-évaluée (perte de périodes sur les signaux de fréquence) on a les trois cas suivants :
- Cas 1: La fréquence Fmin est atteinte et les signaux sont perçus comme incohérents. Le canal de surveillance 11 constate un écart et stoppe la turbo-machine.
- Cas 2 : La fréquence Fmin est atteinte et les signaux semblent cohérents (sur certaines combinaisons de perte d'impulsions). Dans ce cas les contrôles complémentaires suivants interviennent :
   - Du côté canal de régulation 10, la turbo-machine est stoppée en cas de détection d'une variation invraisemblable de la vitesse (basée sur les accélérations/décélération maximum). La perte confirmée d'une ou plusieurs périodes mène à cette détection (cela couvre toute configuration de perte d'impulsions durant le fonctionnement). Le canal de régulation 10 constate cette anomalie et stoppe la turbo-machine.
   - Du côté canal de surveillance 11, la turbo-machine est stoppée en cas de détection de perte de dent sur le signal vitesse du canal de surveillance 11 (on surveille une anomalie sur la périodicité du signal fréquentiel et on détecte une période anormalement longue). Le canal de surveillance 11 constate cette anomalie et stoppe la turbo-machine.
- Cas 3 : La fréquence Fmin n'est pas atteinte, dans ce cas les contrôles complémentaires suivants interviennent :
   - Du côté canal de régulation 10 la turbo-machine est stoppée en cas de détection du fait que la vitesse du canal de régulation 10 n'a pas dépassé la sous-vitesse dans le délai imparti (avec une fréquence > Fmin). Le canal de régulation 10 constate cette anomalie et stoppe la turbo-machine.

Il faut remarquer qu'en utilisant seulement deux capteurs de vitesse 21 et 31 de technologie identique, mais indépendants, on garantit, grâce à l'invention, un niveau d'intégrité de la mesure de vitesse compatible des exigences applicables aux fonctions dont les erreurs peuvent avoir des effets catastrophiques, en particulier les erreurs de mode commun aux deux canaux 10 et 11. L'expérience montre que certains fonctionnement erronés ont causé la défaillance simultanée des canaux de régulation et de surveillance. Ces erreurs dites de « mode commun » annulent l'indépendance des deux canaux si des précautions adéquates ne sont pas prises.

La figure 2 illustre un exemple de réalisation du circuit de mesure de signal 23. Ce circuit comprend un amplificateur opérationnel à hystérésis (300 mV centré sur 2,5 volts) recevant le signal d'entrée ayant traversé un filtre passe-bas 40 dont l'entrée est reliée à un pont de résistances suivi de deux capacités C1 et C2 dont le point milieu est relié à deux diodes D1 et D2 reliées à la masse, et dont la sortie est reliée à une porte 45 pour délivrer un signal carré (O - 5 volts) par écrêtage du signal pseudo-sinusoïdal d'entrée. Un second filtre passe-bas 42 délivre une sortie DC (Test ohmique, détectant une éventuelle rupture du câblage). Un troisième filtre passe-bas 43 suivi d'un condensateur C3 et d'un quatrième filtre passe-bas 44 délivre une sortie DC (Niveau signal AC), une diode D3 reliant l'entrée du quatrième filtre passe-bas à la masse.

Dans un exemple de réalisation certains circuits peuvent être réalisés en logiciel, tels les circuits 24 et 25. Certains circuits peuvent être réalisés sous la forme de circuits dédiés (FPGA), tels les circuits 33, 34 et 37.

## Revendications

1. Dispositif de protection d'un calculateur de turbo-machine d'aéronef contre les erreurs de mesure de vitesse comprenant :
- sur un canal de régulation de vitesse (10) :
• un capteur de vitesse de l'arbre de la boite d'engrenage de la turbo-machine (21),
• un circuit de mesure de vitesse (24),
• un circuit de régulation de vitesse (26),
- sur un canal de surveillance (11) :
• un capteur de vitesse de l'arbre du générateur de gaz de la turbo-machine (31),
• un circuit de mesure de vitesse (34),
• un circuit de commande de l'arrêt de la turbo-machine (37),
tel que :
- les deux capteurs de vitesse (21, 31) sont deux capteurs disposés au regard des dents de deux roues phoniques (20, 30) de technologies différentes et de nombre de dents différents,
- chaque capteur de vitesse (21,31) délivre un signal de fréquence pseudo-sinusoïdal,
- chaque canal (10,11) utilise des caractéristiques dissimilaires aptes à éliminer les erreurs de mode commun,
- le canal de régulation de vitesse (20) comprend un circuit de surveillance de vitesse (25) qui effectue la comparaison du signal de fréquence à un seuil minimum et qui délivre un signal de problème de vitesse (S1) lorsque la fréquence mesurée est inférieure à ce seuil minimum,
- le canal de surveillance (11) comprend un circuit de surveillance de vitesse (35) qui effectue la comparaison du signal de fréquence à un seuil minimum et qui délivre un signal de problème de vitesse (S2) lorsque la fréquence mesurée est inférieure à ce seuil minimum,
et tel qu'il comprend, en outre :
- un circuit (36) de vérification croisée des deux vitesses obtenues, configuré pour détecter un écart anormal entre ces deux vitesses, en détectant la perte d'une période sur l'un des deux signaux ou même des deux signaux simultanément, et qui délivre un signal de problème de vitesse (S3), en cas d'un écart anormal entre les deux vitesses ;
- un circuit (37) de commande éventuelle de l'arrêt de la turbo-machine en cas de problème de vitesse.

2. Dispositif selon la revendication 1, dans lequel les arbres sont des arbres différents tournant à des vitesses de rotation différente.

3. Dispositif selon la revendication 1, dans lequel les signaux de fréquence sont des signaux de fréquences différentes de telle sorte que la perte d'une période sur l'un des signaux ou même des deux signaux simultanément mène à un écart anormal entre les deux vitesses supérieur à l'accélération maximale d'un groupe auxiliaire de puissance et très largement supérieur à l'écart de vitesse lors d'une torsion maximum de l'arbre.

4. Dispositif selon la revendication 1, dans lequel les signaux de fréquence sont véhiculés sur des routages électriques différents.

5. Dispositif selon la revendication 1, dans lequel les signaux de fréquence sont exploités par des cartes électroniques différentes.

6. Dispositif selon la revendication 1, qui comprend un dispositif selon la revendication 1, qui comprend sur chaque canal un circuit de détection de rupture de câblage (23, 33).

7. Dispositif selon la revendication 1, dans lequel la turbo-machine est un groupe auxiliaire de puissance.

8. Aéronef mettant en oeuvre un dispositif selon l'une quelconque des revendications précédentes.

9. Procédé de protection d'un calculateur de turbo-machine d'aéronef contre les erreurs de mesure de vitesse comprenant un générateur de gaz, un compresseur d'air, une boite d'engrenages et une unité de génération électrique, ce calculateur comprenant un canal de régulation de vitesse et un canal de surveillance, le canal de régulation utilisant la fréquence d'un capteur de vitesse de l'arbre de la boite d'engrenages, le canal de surveillance utilisant la fréquence d'un capteur de vitesse de l'arbre du générateur de gaz, le procédé comprenant les étapes suivantes :
- utilisation de deux signaux de fréquence pseudo-sinusoïdaux de caractéristiques dissimilaires,
- comparaison, sur le canal de régulation de vitesse (20), du signal de fréquence à un seuil minimum et délivrance d'un signal de problème de vitesse (S1) lorsque la fréquence mesurée est inférieure à ce seuil minimum,
- comparaison, sur le canal de surveillance (11), du signal de fréquence à un seuil minimum et délivrance d'un signal de problème de vitesse (S2) lorsque la fréquence mesurée est inférieure à ce seuil minimum,
- vérification croisée des deux vitesses obtenues pour détecter un écart anormal entre ces deux vitesses, en détectant la perte d'une période sur l'un des deux signaux ou même des deux signaux simultanément, et délivrance éventuelle d'un signal de problème de vitesse (S3) en cas d'un écart anormal entre les deux vitesses ;
- commande éventuelle de l'arrêt de la turbo-machine en cas de problème de vitesse.

10. Procédé selon la revendication 9, dans lequel la turbo-machine est stoppée en cas d'absence de signal de fréquence, sur au moins un canal, durant un temps déterminé après la commande de démarrage de la turbo-machine.

11. Procédé selon la revendication 9, dans lequel la turbo-machine est stoppée en cas de perte de signal de fréquence en fonctionnement.

12. Procédé selon la revendication 9, dans lequel lorsque la fréquence minimum Fmin est atteinte et que les signaux semblent cohérents, les contrôles complémentaires suivants interviennent :
• du côté canal de régulation (10), la turbo-machine est stoppée en cas de détection d'une variation invraisemblable de la vitesse, la perte confirmée d'une ou plusieurs périodes menant à cette détection, le canal de régulation (10) constatant cette anomalie et stoppant la turbo-machine,
• du côté canal de surveillance (11), la turbo-machine est stoppée en cas de détection de perte de dent sur le signal vitesse du canal de surveillance (11), le canal de surveillance (11) constatant cette anomalie et stoppant la turbo-machine.

13. Procédé selon la revendication 9 dans lequel, dans le cas où la fréquence minimum Fmin n'est pas atteinte, les contrôles complémentaires suivants interviennent :
• du côté canal de régulation (10) la turbo-machine est stoppée en cas de détection du fait que la vitesse du canal de régulation (10) n'a pas dépassé une sous-vitesse, avec une fréquence supérieure à la fréquence minimum Fmin, dans le délai imparti, le canal de régulation (10) constatant cette anomalie et stoppant la turbo-machine.

## Patentansprüche

1. Vorrichtung zum Schutz eines Flugzeugturbomaschinencomputers vor Geschwindigkeitsmessfehlern, die Folgendes umfasst:
- auf einem Geschwindigkeitsregelkanal (10):
• einen Geschwindigkeitssensor für die Welle des Zahnradgetriebes der Turbomaschine (21),
• einen Geschwindigkeitsmesskreis (24),
• einen Geschwindigkeitsregelkreis (26),
- auf einem Überwachungskanal (11):
• einen Geschwindigkeitssensor für die Welle des Gasgenerators der Turbomaschine (31),
• einen Geschwindigkeitsmesskreis (34),
• einen Steuerkreis zum Anhalten der Turbomaschine (37), wobei
- die beiden Geschwindigkeitssensoren (21, 31) zwei Sensoren sind, die bezogen auf die Zähne von zwei phonischen Rädern (20, 30) unterschiedlicher Technologie und mit unterschiedlicher Anzahl von Zähnen angeordnet werden,
- jeder Geschwindigkeitssensor (21, 31) ein pseudo-sinusförmiges Frequenzsignal liefert,
- jeder Kanal (10, 11) andere für die Beseitigung von Gleichtaktfehlern geeignete Merkmale nutzt,
- der Geschwindigkeitsregelkanal (20) einen Geschwindigkeitsüberwachungskreis (25) umfasst, der den Vergleich des Frequenzsignals mit einem Mindestschwellwert durchführt und ein Geschwindigkeitsproblemsignal (S1) ausgibt, wenn die gemessene Frequenz unterhalb dieses Mindestschwellwerts liegt,
- der Überwachungskanal (11) einen Geschwindigkeitsüberwachungskreis (35) umfasst, der den Vergleich des Frequenzsignals mit einem Mindestschwellwert durchführt und ein Geschwindigkeitsproblemsignal (S2) ausgibt, wenn die gemessene Frequenz unterhalb dieses Mindestschwellwerts liegt, wobei er unter anderem Folgendes umfasst:
- einen Stromkreis (36) zur Gegenkontrolle der beiden gemessenen Geschwindigkeiten, der so konfiguriert ist, dass er einen anormalen Unterschied zwischen diesen beiden Geschwindigkeiten erkennt, indem er das Ausbleiben einer Periode auf einem der beiden Signale oder auch auf beiden Signalen gleichzeitig erkennt, und der ein Geschwindigkeitsproblemsignal (S3) ausgibt, wenn ein anormaler Unterschied zwischen den beiden Geschwindigkeiten besteht;
- einen Stromkreis (37) zum Steuern des Anhaltens der Turbomaschine im Falle eines Geschwindigkeitsproblems.

2. Vorrichtung gemäß Anspruch 1, bei der die Wellen unterschiedliche Wellen sind, die sich mit unterschiedlichen Rotationsgeschwindigkeiten drehen.

3. Vorrichtung gemäß Anspruch 1, bei der die Frequenzsignale Signale unterschiedlicher Frequenz sind, sodass das Ausbleiben einer Periode auf einem der Signale oder auch auf beiden Signalen gleichzeitig zu einem anormalen Unterschied zwischen den beiden Geschwindigkeiten führt, der größer als die maximale Beschleunigung eines Hilfsaggregats und deutlich größer als der Geschwindigkeitsunterschied bei maximaler Torsion der Welle ist.

4. Vorrichtung gemäß Anspruch 1, bei der die Frequenzsignale über verschiedene elektrische Leitungsführungen übermittelt werden.

5. Vorrichtung gemäß Anspruch 1, bei der die Frequenzsignale von unterschiedlichen Platinen ausgewertet werden.

6. Vorrichtung gemäß Anspruch 1, die eine Vorrichtung gemäß Anspruch 1 umfasst, die auf jedem Kanal einen Stromkreis zur Erkennung von Kabelbrüchen (23, 33) umfasst.

7. Vorrichtung gemäß Anspruch 1, bei der die Turbomaschine ein Hilfsaggregat ist.

8. Flugzeug, in dem eine Vorrichtung gemäß einem der vorgenannten Ansprüche eingesetzt wird.

9. Verfahren zum Schutz eines Flugzeugturbomaschinencomputers vor Geschwindigkeitsmessfehlern, das einen Gasgenerator, einen Luftkompressor, ein Zahnradgetriebe und eine Stromerzeugungseinheit umfasst, wobei dieser Computer einen Geschwindigkeitsregelkanal, der die Frequenz eines Geschwindigkeitssensors der Welle des Zahnradgetriebes nutzt, und einen Überwachungskanal, der die Frequenz eines Geschwindigkeitssensors der Welle des Gasgenerators nutzt, umfasst, wobei das Verfahren die folgenden Schritte umfasst:
- Nutzung von zwei pseudo-sinusförmigen Frequenzsignalen unterschiedlicher Merkmale,
- auf dem Geschwindigkeitsregelkanal (20) erfolgender Vergleich des Frequenzsignals mit einem Mindestschwellwert und Ausgabe eines Geschwindigkeitsproblemsignals (S1), wenn die gemessene Frequenz unterhalb dieses Mindestschwellwerts liegt,
- auf dem Überwachungskanal (11) erfolgender Vergleich des Frequenzsignals mit einem Mindestschwellwert und Ausgabe eines Geschwindigkeitsproblemsignals (S2), wenn die gemessene Frequenz unterhalb dieses Mindestschwellwerts liegt,
- Gegenkontrolle der beiden gemessenen Geschwindigkeiten zwecks Erkennung eines anormalen Unterschieds zwischen diesen beiden Geschwindigkeiten mittels Erkennung des Ausbleibens einer Periode auf einem der beiden Signale oder auch auf beiden Signalen gleichzeitig und Ausgabe eines Geschwindigkeitsproblemsignals (S3), wenn ein anormaler Unterschied zwischen den beiden Geschwindigkeiten besteht;
- Ausgabe eines Steuerbefehls zum Anhalten der Turbomaschine im Falle eines Geschwindigkeitsproblems.

10. Verfahren gemäß Anspruch 9, bei dem die Turbomaschine im Falle des Nichtvorliegens von Frequenzsignalen auf mindestens einem Kanal für eine festgelegte Dauer nach Ausgabe eines Steuerbefehls zum Starten der Turbomaschine angehalten wird.

11. Vorrichtung gemäß Anspruch 9, bei der die Turbomaschine im Falle des Ausbleibens von Frequenzsignalen während des Betriebs angehalten wird.

12. Vorrichtung gemäß Anspruch 9, bei der in dem Falle, dass die Mindestfrequenz Fmin erreicht wird und die Signale kohärent zu sein scheinen, die folgenden zusätzlichen Kontrollen greifen:
• seitens des Regelkanals (10) wird die Turbomaschine angehalten, wenn eine als unwahrscheinlich einzustufende Schwankung der Geschwindigkeit erkannt wird, wobei diese Erkennung auf dem bestätigten Ausbleiben einer oder mehrerer Perioden beruht, der Regelkanal (10) diese Anomalie erkennt und die Turbomaschine anhält,
• seitens des Überwachungskanals (11) wird die Turbomaschine angehalten, wenn im Geschwindigkeitssignal des Überwachungskanals (11) ein Zahnverlust erkannt wird, wobei der Überwachungskanal (11) diese Anomalie erkennt und die Turbomaschine anhält.

13. Vorrichtung gemäß Anspruch 9, bei der in dem Falle, dass die Mindestfrequenz Fmin nicht erreicht wird, die folgenden zusätzlichen Kontrollen greifen:
• seitens des Regelkanals (10) wird die Turbomaschine angehalten, wenn erkannt wird, dass die Geschwindigkeit des Regelkanals (10) binnen der festgesetzten Frist eine Untergeschwindigkeit mit einer über der Mindestfrequenz Fmin liegenden Frequenz nicht übersteigt, wobei der Regelkanal (10) diese Anomalie erkennt und die Turbomaschine anhält.

## Claims

1. A device for protecting an aircraft turbomachine computer against speed measurement errors, comprising:
- on a speed regulation channel (10):
• a speed sensor of the turbomachine gearbox shaft (21),
• a speed measurement circuit (24),
• a speed regulation circuit (26),
- on a monitoring channel (11):
• a speed sensor of the turbomachine gas generator shaft (31),
• a speed measurement circuit (34),
• a turbomachine stop control circuit (37),
configured so that:
- the two speed sensors (21, 31) are two sensors facing teeth of two wheels (20, 30) of different technologies and having different numbers of teeth,
- each speed sensor (21, 31) delivers a pseudo-sine frequency signal,
- each channel (10, 11) uses dissimilar characteristics able to eliminate the common mode errors,
- the speed regulation channel (20) comprises a speed monitoring circuit (25) which carries out a comparison of the frequency signal to a minimum threshold and which delivers a speed error signal (S1) when the measured frequency is lower than this minimum threshold,
- the monitoring channel (11) comprises a speed monitoring circuit (35) which carries out a comparison of the frequency signal to a minimum threshold and which delivers a speed error signal (S2) when the measured frequency is lower than this minimum threshold,
and configured so that it further comprises:
- a circuit (36) for cross checking the two obtained speeds, configured to detect an abnormal deviation between both speeds, by detecting the loss of a period on one of both signals or even of both signals simultaneously, and which delivers a speed problem signal (S3), in case of an abnormal deviation between both speeds;
- a circuit (37) for possibly controlling the turbomachine stop in case of a speed problem.

2. The device according to claim 1, wherein the shafts are different shafts rotating at different rotational speeds.

3. The device according to claim 1, wherein the frequency signals are signals of different frequencies such that the loss of a period on one of the signals or even of both signals simultaneously leads to an abnormal deviation between both speeds which is higher than the maximum acceleration of an auxiliary power unit and greatly higher than the speed deviation upon a shaft maximum torsion.

4. The device according to claim 1, wherein the frequency signals are conveyed on different electrical routings.

5. The device according to claim 1, wherein the frequency signals are used by different electronic boards.

6. The device according to claim 1, which comprises a device according to claim 1, which comprises a wiring break detection circuit (23, 33) on each channel.

7. The device according to claim 1, wherein the turbomachine is an auxiliary power unit.

8. An aircraft implementing a device according to any of the preceding claims.

9. A method for protecting an aircraft turbomachine computer against speed measurement errors, comprising a gas generator, an air compressor, a gearbox and an electrical power supply unit, this computer comprising a speed regulation channel and a monitoring channel, the regulation channel using the frequency of a speed sensor of the gearbox shaft, the monitoring channel using the frequency of a speed sensor of the gas generator shaft,
the method comprising the following steps:
- using two pseudo-sine frequency signals having dissimilar characteristics,
- comparing, on the speed regulation channel (20), the frequency signal to a minimum threshold and delivering a speed error signal (S1) when the measured frequency is lower than this minimum threshold,
- comparing, on the monitoring channel (11), the frequency signal to a minimum threshold and delivering a speed error signal (S2) when the measured frequency is lower than this minimum threshold,
- cross checking the two obtained speeds to detect an abnormal deviation between both speeds, by detecting the loss of a period on one of both signals or even of both signals simultaneously, and possibly delivering a speed problem signal (S3) in case of an abnormal deviation between both speeds;
- possibly controlling the turbomachine stop in case of a speed problem.

10. The method according to claim 9, wherein the turbomachine is stopped in case of absence of a frequency signal, on at least one channel, during a determined time after the turbomachine start control.

11. The method according to claim 9, wherein the turbomachine is stopped in case of a frequency signal loss in operation.

12. The method according to claim 9, wherein when the minimum frequency Fmin is reached and the signals seem coherent, the following additional checks occur:
• on the regulation channel (10) side, the turbomachine is stopped in case of detection of an unlikely speed variation, the confirmed loss of one or several periods leading to this detection, the regulation channel (10) establishing this defect and stopping the turbomachine,
• on the monitoring channel (11) side, the turbomachine is stopped in case of detection of a tooth loss on the speed signal of the monitoring channel (11), the monitoring channel (11) establishing this defect and stopping the turbomachine.

13. The method according to claim 9, wherein, in the case where the minimum frequency Fmin is not reached, the following additional checks occur:
• on the regulation channel (10) side, the turbomachine is stopped in case of detection that the speed of the regulation channel (10) has not exceeded an underspeed, with a frequency higher than the minimum frequency Fmin, within the allotted time, the regulation channel (10) establishing this defect and stopping the turbomachine.
